# EUROPÄISCHE PATENTSCHRIFT

(11) **EP 1 243 830 B1**
(45) Veröffentlichungstag und Bekanntmachung des Hinweises auf die Patenterteilung: **11.08.2004**
(21) Anmeldenummer: 02006087.7
(22) Anmeldetag: 18.03.2002
(51) Int. Cl.: F16L 5/02

(54) **Vakuumdurchführung für Ultrahochvakuum-Anlagen**
Vacuum feed through for ultra-high vacuum installations
Traversée sous-vide pour dispositif ultra-vide

(30) Priorität: 23.03.2001 DE 10114336
(43) Veröffentlichungstag der Anmeldung: 25.09.2002
(73) Patentinhaber: Max-Planck-Gesellschaft zur Förderung der Wissenschaften e.V., 80539 München (DE)
(72) Erfinder: Steinberger, Jürgen, 85716 Unterschleissheim (DE)
(74) Vertreter: Hertz, Oliver, Dr.

(56) Entgegenhaltungen:
- DE-A- 4 340 051
- US-A- 6 150 608

## Beschreibung

Die Erfindung betrifft eine Vakuumdurchführung für mindestens eine Verbindungsleitung, die vom Inneren einer Vakuumanlage nach außen führt, insbesondere eine Vakuumdurchführung für Anschlussleitungen von Sensoren, wie z. B. Thermoelementen, die im Vakuumbereich der Vakuumanlage angeordnet sind und deren Signale zur Auswertung in den Außenbereich unter Normaldruck geleitet werden sollen.

In der Vakuumtechnik bestehen messtechnische Aufgaben, die auf die Erfassung von bestimmten Prozessen oder Zuständen in Vakuumanlagen gerichtet sind. Dies betrifft beispielsweise die Überwachung von Prozessparametern in der Beschichtungstechnik oder auch von Betriebszuständen in komplexeren Systemen, wie z. B. Großvakuumanlagen für Fusionsexperimente. Bei Fusionsexperimenten wird insbesondere die Temperatur von Hitzeschildern, Leistungsabsorbern und Zusatzheizungen gemessen und überwacht. Die Temperaturmessung erfolgt mit Mantelthermoelementen, deren Signale vom Vakuumbereich nach außen übertragen werden.

Herkömmliche Techniken zur Durchführung von Verbindungsleitungen von Mantelthermoelementen vom Vakuum- in den Außenbereich basieren auf dem direkten Einlöten von Mantelthermoelementen in einem Vakuum-Durchführungsflansch oder auf der Verwendung spezieller elektrischer Vakuumdurchführungen, an die innen ein Thermoelement und außen Anschlusskabel angesteckt werden. Die erste Variante besitzt den Nachteil, dass defekte Mantelthermoelemente nur mit großem Aufwand ausgetauscht werden können.

Die zweite Variante ist wegen der Gefahr der Erzeugung von Fehlspannungen an der Vakuumdurchführung mit den Steckverbindungen nachteilig. Ein wichtiger Nachteil beider Techniken besteht darin, dass zur Durchführung von Verbindungsleitungen einer Vielzahl von Mantelthermoelementen viel Platz benötigt wird.

Es besteht jedoch insbesondere bei Vakuumanlagen für Fusionsexperimente ein Bedarf zur platzsparenden Durchführung einer Vielzahl von Verbindungsleitungen. Beispielsweise werden für ein Kalorimeter für die Neutralinjektion, das in den Neutralstrahl eingefahren wird und dessen Energieverteilung räumlich aufgelöst messen soll, 90 Mantelthermoelemente benötigt. Das Problem der Vakuumdurchführung einer Vielzahl von Verbindungsleitungen besteht aber nicht nur bei Fusionsexperimenten, sondern generell bei allen Arten von Vakuumanlagen. Des weiteren besteht nicht nur ein Bedarf an Vakuumdurchführungen für Verbindungsleitungen von Thermoelementen. Anwendungsabhängig kann auch ein Interesse an anderen elektrischen oder optischen Verbindungen mit Sensoren oder Manipulatoren bestehen, die im Vakuumbereich angeordnet sind.

In US 6150608 ist eine abdichtbare Durchführung für eine Mehrzahl von Verbindungsleitungen mit zwei Flanschen und zwischen den beiden Flanschen angeordneten Stützringen beschrieben. Dort wird vorgeschlagen, eine Öffnung, die zur Durchführung von Verbindungsleitungen verwendet wird, durch zwei Flansche abzudichten, die jeweils von innen und außen auf die Öffnung montiert werden. Die Dichtfunktion soll dabei durch Dichtungsmaterial, das zwischen den Flanschen eingeschlossen ist, sichergestellt werden.

Die Aufgabe der Erfindung ist es, eine verbesserte Vakuumdurchführung für Vakuumanlagen anzugeben, mit der die Nachteile herkömmlicher Vakuumdurchführungen überwunden werden. Mit der neuen Vakuumdurchführung soll mindestens eine Verbindungsleitung vom Vakuumbereich nach außen geführt werden, wobei die Durchführung insbesondere störungsfrei gebildet sein und eine vereinfachte Austauschbarkeit der Verbindungsleitung ermöglichen soll. Die Vakuumdurchführung soll sich ferner durch einen verminderten Platzbedarf auszeichnen.

Diese Aufgabe wird durch eine Vakuumdurchführung mit den Merkmalen gemäß Anspruch 1 gelöst. Vorteilhafte Ausführungsformen der Erfindung ergeben sich aus den abhängigen Ansprüchen.

Die Grundidee der Erfindung ist es, abweichend von herkömmlichen Vakuumdurchführungen mit axial geführten Leitungen eine Vakuumdurchführung bereitzustellen, bei der mindestens eine Verbindungsleitung zwischen zwei Flanschen radial nach außen geführt wird. Zur Vakuumdichtung befindet sich zwischen den Flanschen auf deren zueinander weisenden Oberflächen ein Aufbau aus radialsymmetrisch voneinander beabstandet angeordneten Stützringen, die eine ringförmige Nut zur Aufnahme von Dichtungsmaterial und mindestens eine radial orientierte Führung für die mindestens eine Verbindungsleitung bilden. Als Dichtungsmaterial kommen Elastomere oder auch weiche Metalle zum Einsatz.

Der Aufbau aus Flanschen und Stützringen ist vorteilhafterweise wiederholt zerstörungsfrei demontierbar und zusammensetzbar, so dass Verbindungsleitungen ohne weiteres ergänzt oder ausgetauscht werden können. Ferner besitzt die radiale Durchführung von einer oder mehreren Verbindungsleitungen an einer Flanschverbindung den Vorteil einer erheblichen Platzersparnis.

Gemäß einer bevorzugten Ausführungsform der Erfindung sind die Stützringe so ausgelegt, dass das Volumen der zwischen ihnen gebildeten ringförmigen Nut genau dem Volumen des Dichtungsmaterials entspricht oder geringfügig kleiner ist. Die Flansche besitzen ringförmige Erhebungen, die als Stempel beidseitig in die Nut zwischen den Stützringen hineinragen und ein plastisches Verformen des Dichtungsmaterials bewirken. Das Dichtungsmaterial umfließt die Verbindungsleitungen. Es hat sich ergeben, dass die erfindungsgemäße Vakuumdurchführung selbst bei einer Vielzahl von Verbindungsleitungen (z. B. 10 oder mehr) selbst für UHV-Anwendungen vakuumdicht ist.

Die Erfindung besitzt die folgenden Vorteile. Die Vakuumdurchführung besitzt eine relativ zur hohen Anzahl durchführbarer Verbindungsleitungen kleine Bauform. Die Vakuumdurchführung ist einfach demontierbar, sie besitzt einen weiten Anwendungsbereich bei beliebigen Vakuumanlagen und kann mit gängigen verfügbaren Dichtungsmaterialien aufgebaut werden. Die Vakuumdurchführung ermöglicht insbesondere die Einbettung von Verbindungsleitungen, die an beiden Enden bauformbedingte Verdickungen, z. B. Sensorteile, Stecker oder dgl., aufweisen.

Weitere Vorteile und Einzelheiten der Erfindung werden im folgenden unter Bezug auf die beigefügten Zeichnungen beschrieben. Es zeigen:
- Fig. 1:: eine schematische Schnittansicht einer Ausführungsform einer erfindungsgemäßen Vakuumdurchführung,
- Fig. 2:: eine Draufsicht auf die in Fig. 1 illustrierte Vakuumdurchführung, und
- Fig. 3, 4:: Perspektivansichten einer erfindungsgemäßen Vakuumdurchführung in verschiedenen Montagezuständen.

Die Erfindung wird im Folgenden beispielhaft unter Bezug auf eine Vakuumdurchführung für 30 Mantelthermoelemente erläutert, ist jedoch auf diese Ausführungsform nicht beschränkt. Sie ist vielmehr mit beliebigen Verbindungsleitungen umsetzbar. Unter Verbindungsleitung wird allgemein jede Verbindung in Form einer Leitung, eines Stranges, eines Kabels, eines Drahtes oder dgl. verstanden, das einen Sensor und/oder einen Manipulator im Vakuumbereich mit einer Mess- und/oder Steuereinrichtung im Außenbereich verbindet. Die Verbindung kann mehrkomponentig, z. B. als Verbindungsleitung für ein Mantelthermoelement oder eine elektrische Leitung mit einer Isolation, aufgebaut sein und dient vorzugsweise der Weiterleitung elektrischer oder optischer Mess- und/oder Steuersignale. Die Verbindung ist vorzugsweise flexibel, so dass sie an der Vakuumdurchführung von einer axialen Führung in einem Rohr in die radiale Führung der Vakuumdurchführung umgelenkt werden kann. Es sind aber auch starre Ausführungen mit einer angepassten Form verwendbar.

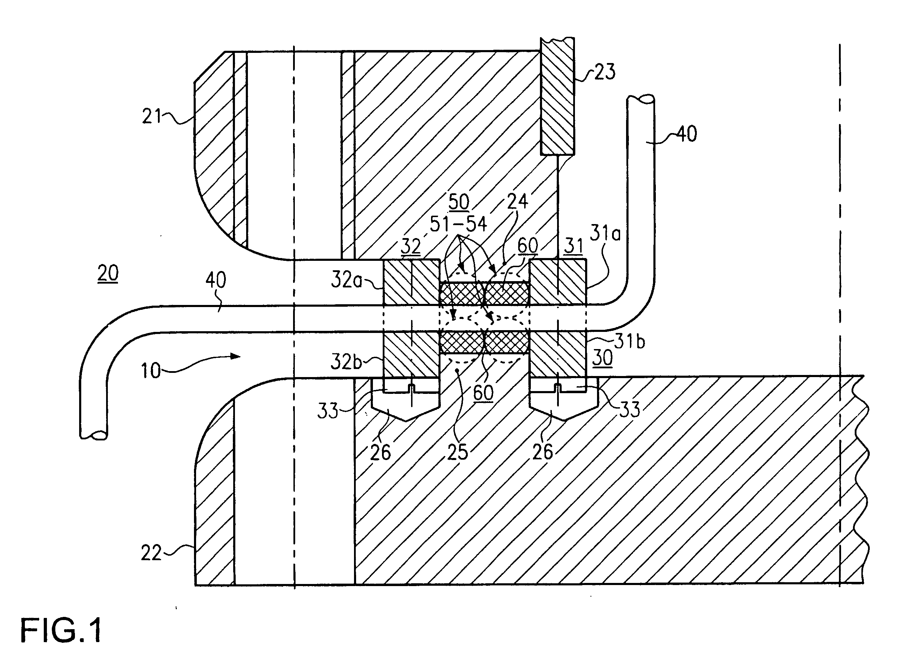

Fig. 1 zeigt eine erfindungsgemäße Vakuumdurchführung 10 an einer teilweise dargestellten Flanschverbindung 20. Die Flanschverbindung 20 umfaßt einen ersten Flansch 21, der auch als Basisflansch bezeichnet wird, und einen zweiten Flansch 22, der auch als Deckelflansch bezeichnet wird. Der Basisflansch 21 ist an einem Verbindungsrohr 23 befestigt, z. B. angeschweißt, das mit dem Rezipienten einer UHV-Anlage (nicht dargestellt) verbunden ist.

Am Basisflansch 21 ist in der Ebene der Flanschverbindung ein Stützringaufbau 30 angebracht, der aus einem inneren Stützring 31 und einem äußeren Stützring 32 besteht. Jeder Stützring wird durch zwei Teilringe gebildet, die entsprechend den inneren Basis-Stützring 31a, den inneren Deckel-Stützring 31b, den äußeren Basis-Stützring 32a und den äußeren Deckel-Stützring 32b umfassen. Die Teilringe sind mit mehreren Befestigungsschrauben 33 (mindestens 3) miteinander verbunden. Der Stützringaufbau 30 ist axialsymmetrisch zum Verbindungsrohr 23 angeordnet.

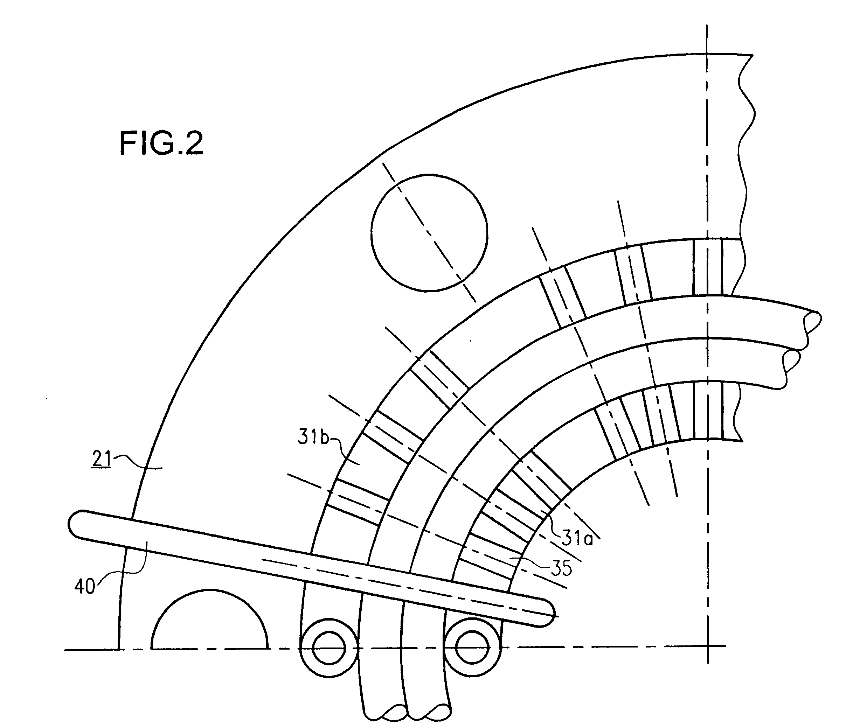

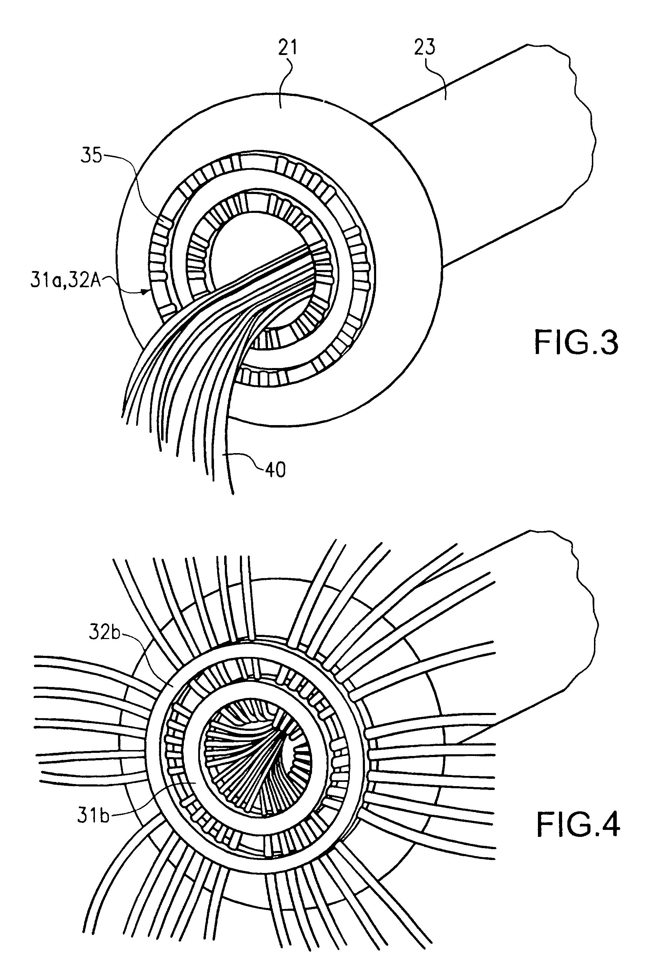

Die Teilringe der inneren und äußeren Stützringe 31, 32 besitzen auf den zueinander weisenden Oberflächen Ausnehmungen 35 (siehe auch Fig. 2, 3). Im zusammengesetzten Zustand der Teilringe wirken die Ausnehmungen 35 so zusammen, dass sie eine Führung für die durch die Vakuumdurchführung hindurchtretende Verbindungsleitung bilden. Dementsprechend ist die Querschnittsform der Ausnehmungen 35 anwendungsabhängig an die äußere Form der Verbindungsleitung angepasst. Die Ausnehmungen 35 besitzen z. B. jeweils einen halbkreisförmigen Querschnitt. Im zusammengesetzten Zustand des Stützringaufbaus 30 ruht die mindestens eine Verbindungsleitung 40 formschlüssig in den durch die Ausnehmungen 35 gebildeten Kanälen in den inneren und äußeren Stützringen 31, 32.

Zwischen den inneren und äußeren Stützringen 31, 32 wird eine ringförmige Nut 60 gebildet, in der Dichtungsmaterial 50 angeordnet ist. Das Dichtungsmaterial 50 umfaßt mindestens zwei Dichtungsringe, die jeweils auf den Seiten der Basis- und Deckelflansche 21, 22 in der Nut 60 angeordnet sind. Bei der dargestellten Ausführungsform sind als Dichtungsmaterial auf jeder Seite zwei O-Ringe 51, 52 und 53, 54 vorgesehen. Als Dichtungsmaterial wird beispielsweise Viton oder Indium verwendet.

Gemäß einer bevorzugten Ausführungsform der Erfindung sind an den Flanschoberflächen der Basis- und Deckelflansche 21, 22 ringförmig verlaufende Stempel 24, 25 vorgesehen, deren Breite gerade dem Abstand zwischen dem inneren und äußeren Stützring 31, 32 entspricht und deren Höhe gemeinsam mit der axialen Dicke der Stützringe 31, 32 das Volumen der Nut 60 definiert. Am Deckelflansch 22 sind an den Stempel 25 angrenzend Bohrungen 26 vorgesehen, die eine Aufnahme für die Verbindungsschrauben 33 bilden.

Die illustrierten Komponenten der erfindungsgemäßen Vakuumdurchführung wirken wie folgt zusammen. Im zusammengesetzten Zustand des Stützringaufbaus 31 wird die mindestens eine Verbindungsleitung 40 durch die Ausnehmungen 35 in den Stützringen 31, 32 radial gerade nach außen geführt. Das Dichtungsmaterial, das in Fig. 1 gestrichelt im entspannten Zustand illustriert ist, wird im zusammengeschraubten Zustand der Flansche zwischen dem Stempel 24 und der Verbindungsleitung 40 zusammengepreßt. Die Dichtung wird plastisch verformt. Das Dichtungsmaterial wird von beiden Seiten durch die ringförmigen Stempel 24, 25 so in die Nut 60 gedrückt, dass diese vollständig ausgefüllt wird. Ein Ausweichen des Dichtungsmaterials nach außen oder innen wird durch die Stützringe verhindert. Vorzugsweise sind die Volumina des Dichtungsmaterials und des Innenraumes der Nut 60 im zusammengesetzten Zustand der Vakuumdurchführung gleich gewählt. In diesem Fall ist es möglich, den Deckelflansch 22 bis auf Block fest an den Basisflansch 21 anzuschrauben.

Typische Maße der erfindungsgemäßen Vakuumdurchführung sind beispielsweise: Außendurchmesser der Flansche: 42 mm, Durchmesser des Verbindungsrohres 23: 18 mm, Durchmesser der Verbindungsleitung 40 und der durch die Ausnehmungen 35 gebildeten Führungen: 1 mm, radiale Breite der Stützringe 31, 32: 2 mm, Maße der Dichtungsringe: 19 mm 1.5 mm und 22 mm 1.5 mm, Innendurchmesser des äußeren Stützringes: 25 mm, Breite der Nut: 3 mm, Abstand der Flanschoberflächen im zusammengesetzten Zustand im Stempelbereich: 2,36 mm, Volumenquerschnitt 7,07 mm².

Die erfindungsgemäße Vakuumdurchführung wird wie folgt montiert. Zwischenzustände sind in den Fign. 3 und 4 illustriert. Zunächst wird an der freien Oberfläche des am Verbindungsrohr 23 angebrachten Basisflansches 21 ein Teil des Stützringaufbaus 30 aufgesteckt. Die inneren und äußeren Basis-Stützringe 31a, 32a werden am Basis-Flansch 21 aufgesteckt. Anschließend werden beispielsweise 30 Verbindungsleitungen 40 eingefädelt (siehe Fig. 3). Nach Einlegen des Dichtungsmaterials in den Abstand zwischen den inneren und äußeren Teilringen 31a, 32a werden die Verbindungsleitungen radial nach außen in die Ausnehmungen 35 eingelegt und durch Aufschrauben der inneren und äußeren Deckel-Stützringe 31b, 32b fixiert. Dieser Zustand ist in Fig. 4 illustriert. Die Teilringe werden miteinander verschraubt. Anschließend wird in den Abstand zwischen den inneren und äußeren Deckel-Stützringen 31b, 32b Dichtungsmaterial eingelegt und der Deckelflansch 22 (in Fig. 4 nicht dargestellt) aufgeschraubt. Dabei werden die Dichtungen vollständig verpresst. Schließlich werden die radial nach außen geführten Verbindungsleitungen anwendungsabhängig umgelegt und weiterverlegt.

Die erfindungsgemäße Vakuumdurchführung kann wie folgt modifiziert werden. Anstelle des als Blindflansch dargestellten Deckelflansches 22 kann auch ein Flansch mit einer weiteren Rohrverbindung vorgesehen sein. Falls die Anzahl der durch die Ausnehmungen 35 gebildeten Führungen für die Verbindungsleitungen größer als die Anzahl der durchzuführenden Verbindungsleitungen ist, so kann in frei bleibende Ausnehmungen auch ein stabförmiges Blindstück mit einem entsprechenden Durchmesser eingelegt werden.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Vakuumdurchführung (10) für mindestens eine Verbindungsleitung (40), mit zwei Flanschen (21, 22), zwischen denen ein Aufbau (30) aus Stützringen (31, 32) vorgesehen ist,
**dadurch gekennzeichnet, dass**
die Stützringe (31, 32) in dem Aufbau (30) radialsymmetrisch voneinander beabstandet angeordnet sind, wobei sie eine ringförmige Nut (60) zur Aufnahme von Dichtungsmaterial (50) und mindestens eine sich radial nach außen erstreckende Führung (35) für die Verbindungsleitung (40) bilden.

2. Vakuumdurchführung gemäß Anspruch 1, bei der die Stützringe (31, 32) jeweils durch einen inneren Basis-Stützring (31a) und einen inneren Deckel-Stützring (31b) sowie einen äußeren Basis-Stützring (32a) und einen äußeren Deckel-Stützring (32b) gebildet werden, die über eine Schraubverbindung (33) lösbar miteinander verbunden sind.

3. Vakuumdurchführung gemäß einem der vorhergehenden Ansprüche, bei dem das Volumen der Nut (60) gleich dem Volumen des Dichtungsmaterials (50) ist.

4. Vakuumdurchführung gemäß einem der vorhergehenden Ansprüche, bei der auf den zueinander weisenden Oberflächen der Flansche (21, 22) zwischen den Stützringen (31, 32) ringförmige Stempel (24, 25) vorgesehen sind.

5. Vakuumdurchführung gemäß einem der vorhergehenden Ansprüche, bei dem das Dichtungsmaterial aus Elastomer, insbesondere Viton, oder weichem Metall, wie z. B. Indium, besteht.

6. Vakuumdurchführung gemäß einem der vorhergehenden Ansprüche, bei dem eine Vielzahl von Verbindungsleitungen, insbesondere mehr als zehn Verbindungsleitungen, vorgesehen sind.

7. Vakuumdurchführung gemäß einem der vorhergehenden Ansprüche, bei der die Verbindungsleitungen Anschlussleitungen von Thermoelementen sind.

8. Vakuumdurchführung gemäß einem der vorhergehenden Ansprüche, bei der die Verbindungsleitungen auf beiden Seiten Verdickungen, insbesondere Stecker, aufweisen.

## Claims

1. Vacuum feedthrough (10) for at least one connection line (40), having two flanges (21, 22), between which a structure (30) made of support rings (31, 32) is provided,
**characterised in that**
the support rings (31, 32) in the structure (30) are disposed radially symmetrically spaced from each other, forming an annular groove (60) for receiving sealing material (50) and at least one guide (35) for the connection line (40), which guide extends radially outwardly.

2. Vacuum feedthrough according to claim 1, in which the support rings (31, 32) are formed respectively by an inner base support ring (31a) and an inner cover support ring (31 b) and also an outer base support ring (32a) and an outer cover support ring (32b), which are connected detachably to each other via a screw connection (33).

3. Vacuum feedthrough according to one of the preceding claims, in which the volume of the groove (60) is the same as the volume of the sealing material (50).

4. Vacuum feedthrough according to one of the preceding claims, in which annular stamps (24, 25) are provided between the support rings (31, 32) upon the surfaces of the flanges (21, 22) which point towards each other.

5. Vacuum feedthrough according to one of the preceding claims, in which the sealing material comprises elastomer, in particular Viton, or soft metal, such as e.g. indium.

6. Vacuum feedthrough according to one of the preceding claims, in which a multiplicity of connection lines, in particular more than ten connection lines, is provided.

7. Vacuum feedthrough according to one of the preceding claims, in which the connection lines are connection lines of thermoelements.

8. Vacuum feedthrough according to one of the preceding claims, in which the connection lines have thickenings, in particular connectors, on both sides.

## Revendications

1. Traversée sous vide (10) pour au moins une ligne de connexion (40), comprenant deux brides (21, 22), entre lesquelles est prévue une structure (30) composée de bagues d'appui (31, 32),
**caractérisée en ce que**
les bagues d'appui (31, 32) sont disposées dans la structure (30) en écartées l'une de l'autre à symétrie radiale, moyennant quoi elles forment une rainure (60) annulaire pour le logement du matériau d'étanchéité (50) et au moins une traversée (35) s'étendant dans le sens radial vers l'extérieur pour la ligne de connexion (40).

2. Traversée sous vide selon la revendication 1, dans laquelle les bagues d'appui (31, 32) sont formées respectivement par une bague d'appui de base intérieure (31a) et une bague d'appui de recouvrement intérieure (31b) ainsi que par une bague d'appui de base extérieure (32a) et une bague d'appui de recouvrement extérieure (32b), qui sont reliées les unes aux autres de manière détachable par un raccord à vis (33).

3. Traversée sous vide selon l'une des revendications précédentes, dans laquelle le volume de la rainure (60) est le même que le volume du matériau d'étanchéité (50).

4. Traversée sous vide selon l'une des revendications précédentes, dans laquelle des poinçons (24, 25) de forme annulaire sont prévus entre les bagues d'appui (31, 32) sur les surfaces supérieures de la bride (21, 22) orientées l'une vers l'autre.

5. Traversée sous vide selon l'une des revendications précédentes, dans laquelle le matériau le viton, ou un métal souple, comme par exemple l'indium.

6. Traverse sous vide selon l'une des revendications précédentes, dans laquelle une pluralité de lignes de connexion, en particulier plus de dix lignes de connexion, est prévue.

7. Traverse sous vide selon l'une des revendications précédentes, dans laquelle les lignes de connexion sont des lignes de raccordement de thermocouples.

8. Traverse sous vide selon l'une des revendications précédentes, dans laquelle les lignes de connexion comprennent sur les deux côtés des épaississements, en particulier des connecteurs.
